# EUROPEAN PATENT APPLICATION

(11) **EP 0 901 124 A2**
(43) Date of publication of application: **10.03.1999**
(21) Application number: 98307043.4
(22) Date of filing: 02.09.1998
(51) Int. Cl.: G11B 20/00

(54) **Signal/data transmission, reception, recording and/or reproduction**

(30) Priority: 02.09.1997 JP 237193/97; 08.10.1997 JP 267028/97
(71) Applicant: SONY CORPORATION, Tokyo 141 (JP)
(72) Inventor: Hirai, Jun, Shinagawa-ku, Tokyo 141 (JP)
(74) Representative: Turner, James Arthur

(57) **Abstract**

A transmission and/or recording apparatus for superimposing the copyright protection control information or the copyright appendage information on original signals, such as musical data or picture data, by electronic watermark processing in meeting with respective requirements. A screen displayed on the basis of picture signals as original signals is split into two layers. The first layer is further split into two areas in which the information of 10 bits or less as the copyright protection control information are superimposed by electronic watermark processing. In the second layer are superimposed 20 or more bits of the copyright appendage information using electronic watermark processing. In these first and second layers, synthesis or detection is performed using encoders and decoders having different methods or parameters.

## Description

This invention relates to signal/data transmission, reception, recording and/or reproduction.

There are occasions wherein the copyright information for inhibiting unauthorized duplication is appended to musical data or picture data stored on the recording medium and furnished in this form or furnished over a network as a transmission medium.

Typical of items of the copyright information for musical data or picture data are copyright protection control information and copyright appendage information .

Copyright protection control information is, for example, 2-bit information indicating whether musical or picture data recorded on a recording medium or transmitted can be duplicated, can be duplicated only once, cannot be continued to be duplicated, or cannot be duplicated. That is, this copyright protection control information affords control information to a drive used for reproducing the recording medium having this information recorded thereon. For example, the drive which has reproduced the copyright protection control information performs control such as by stopping outputting reproduced musical data or picture data or stopping the duplicating operation based on this copyright protection control information.

Copyright appendage information is information indicating the source of the musical or picture data recorded on the recording medium or transmitted, the particular machine which recorded the musical or picture data and the user who recorded the musical or picture data. That is, the copyright appendage information indicates the origin, hysteresis and evidences of the musical or picture data. Typical of the items of the copyright appendage information is the International Standard Recording Code (ISRC) in the CD format. This ISRC is a code of approximately 60 bits unique to each musical number. It is currently attempted to use this ISRC in order for the copyright owner or purveyor of the musical or picture data to read out the copyright appendage information from musical data generated by unauthorized duplication or the like and to use the read-out copyright appendage information in order to demonstrate the source of the musical data generated by the unauthorized duplication.

With recent progress in the Internet or audio visual equipment , means for circulating digital contents are increasing rapidly. In keeping up with this tendency, unauthorized duplication of digital contents such as musical or picture data is raising a problem. For prohibiting such unauthorized duplication of digital contents, there is proposed a method of burying the above-mentioned copyright information by electronic watermark processing.

The electronic watermark processing is the processing of burying the information in a perceptually non-crucial portion of the musical or picture data, that is a non-redundant portion with respect to the music or the picture, so that the audience cannot perceive the information. If the musical data or the picture data has the copyright information buried therein using the electronic watermark processing, the copyright information is difficult to remove such that this copyright information can be retrieved even after processing of filtering or encoding.

Meanwhile, the above-mentioned copyright protection control information reportedly needs to be appended at a transfer rate of once per 10 sec in the case of musical data. It is desired that this copyright protection control information be buried at a higher transfer rate by the electronic watermark processing in order to prohibit unauthorized duplication even after propagation of a new media. In the case of the compact disc, the copyright appendage information is buried as data of the order of approximately 80 bits. It is desired that this copyright protection control information be buried at a higher transfer rate by the electronic watermark processing in order to prohibit unauthorized duplication even after propagation of a new media.

However, the copyright protection control information or the copyright appendage information has so far been handled as a sole item of the copyright information and superimposed on the original signals using e.g., a sole encoder. That is, if, in musical or picture data, on which is superimposed the copyright information by electronic watermark processing, the transfer rate or the volume of the copyright information is increased, the following problems arise.

That is, if the transfer rate or the volume of the copyright information, superimposed on the musical data or the picture data by electronic watermark processing, is increased, the musical or picture data are deteriorated in signal quality significantly.

Moreover, if the transfer rate or the volume of the copyright information, superimposed on the musical data or the picture data by electronic watermark processing, is increased, the musical or picture data are deteriorated in robustness.

Also, if the transfer rate or the volume of the copyright information, superimposed on the musical data or the picture data by electronic watermark processing, the number of key data, for example, is decreased to present security problems.

In addition, if the transfer rate or the volume of the copyright information, superimposed on the musical data or the picture data by electronic watermark processing, the encoder or the decoder is increased in complexity in structure to increase the cost.

Various respective aspects of the invention are defined in the appended claims.

Embodiments of the present invention can provide a transmission and/or recording device, a reception and/or reproducing apparatus, a transmission and reception/recording and reproducing apparatus, a transmission reception system, a transmission and/or recording method, a reception and/or reproducing method, a transmission method and a recording medium, whereby the above-mentioned problems can be overcome or at least alleviated.

A transmission and/or recording apparatus according to embodiments of the present invention includes a plurality of encoders for superimposing a plurality of items of the copyright information on original signals by electronic watermark processing of respective different systems and/or parameters, and transmitting or recording means for transmitting the original signals, having the plural sorts of the copyright information superimposed thereon by the encoders, on a transmission medium, or recording the signals having the plural sorts of the copyright information superimposed thereon on a recording medium.

With the present transmission and/or recording apparatus, plural items of the plural items of the copyright information are superimposed on the original signals by electronic watermark processing of respectively different systems and/or parameters. That is, with the present transmission and/or recording apparatus, different systems and/or parameters are used depending on the contents of each copyright information.

A transmission and/or recording apparatus according to embodiments of the present invention includes an encoder for superimposing a plurality of items of the copyright information on original signals by electronic watermark processing of respective different systems or parameters, and transmitting or recording means for transmitting the original signals, having the plural sorts of the copyright information superimposed thereon by the encoder, over a transmission medium, or recording the signals having the plural sorts of the copyright information superimposed thereon, on a recording medium.

A reception and/or reproducing apparatus according to embodiments of the present invention includes receiving or reproducing means for receiving original signals, having plural sorts of the copyright information superimposed thereon by electronic watermark processing of respective different systems and/or parameters, over a transmission medium, or for reproducing the signals having the plural sorts of the copyright information superimposed thereon, from a recording medium, and a decoder for detecting a sole item of the copyright information from the signals received or reproduced by the reception or reproducing means by processing corresponding to the electronic watermark processing of the systems and/or parameters of superimposition of the sole item of the copyright protection control information.

With the present reception and/or reproducing apparatus, a sole item of the copyright information is detected from the original signals on which plural items of the copyright information are superimposed by electronic watermark processing of respectively different systems or parameters. That is, the present reception and/or reproducing apparatus detects the copyright information whose systems or parameters have been changed depending on the contents.

A transmission and reception/recording and reproducing apparatus according to embodiments of the present invention includes a plurality of encoders for superimposing a plurality of items of the copyright information on original signals by electronic watermark processing of respective different systems and/or parameters, transmitting or recording means for transmitting the original signals, having the plural items of the copyright information superimposed thereon by the encoders, over a transmission medium, or recording the signals, having the plural items of the copyright information superimposed thereon, on a recording medium, reception or reproducing means for receiving original signals, having superimposed thereon plural items of the copyright information by electronic watermark processing of respective different systems and/or parameters, over a transmission medium, or reproducing the original signals, having superimposed thereon plural items of the copyright information by the plural encoders, from the recording medium, and a decoder for detecting a sole item of the copyright information from signals received or reproduced by the reception or reproducing means by processing corresponding to electronic watermark processing of the system or parameters of superimposition of the sole item of the copyright information.

The present transmission and reception/recording and reproducing apparatus superimposes plural items of the copyright information on the original signals by electronic watermark processing of respectively different systems and/or parameters and detects a sole item of the copyright information from the original signals on which plural items of the copyright information have been superimposed by electronic watermark processing of respectively different systems and/or parameters. That is, with the present transmission and reception/recording and reproducing apparatus, the systems and/or parameters are changed depending on the contents of the respective items of the copyright information, and the copyright information, having the systems and/or parameters changed depending on the contents, is detected.

A transmission and reception/recording and reproducing apparatus according to embodiments of the present invention includes a plurality of encoders for superimposing a plurality of items of the copyright information on original signals by electronic watermark processing of respective different systems or parameters, transmitting or recording means for transmitting the original signals, having the plural items of the copyright information superimposed thereon by the encoders, over a transmission medium, or recording the signals having the plural items of the copyright information superimposed thereon on a recording medium, receiving or reproducing means for receiving original signals, having plural items of the copyright information superimposed thereon by electronic watermark processing of respective different systems or parameters, over a transmission medium, or reproducing the original signals, having plural items of the copyright information superimposed thereon by the plural encoders, from the recording medium, and a decoder for detecting a sole item of the copyright information from signals received or reproduced by the receiving or reproducing means by processing corresponding to the electronic watermark processing of the system or parameters of superimposition of the sole item of the copyright information.

With the present transmission and reception/recording and reproducing apparatus, plural items of the copyright information are superimposed on the original signals by electronic watermark processing of respectively different systems or parameters, and a sole item of the copyright information is detected from the original signals having plural items of the copyright information superimposed thereon by electronic watermark processing of respectively different systems or parameters. That is, with the present transmission and reception/recording and reproducing apparatus, the systems or parameters are changed depending on the contents of the respective items of the copyright information, while the copyright information, whose systems or parameters have been changed depending on the contents, is detected.

A transmission/reception system according to embodiments of the present invention includes a transmission device and a reception device. The transmission device includes a plurality of encoders for superimposing plural items of the copyright information on original signals by electronic watermark processing of respective different systems and/or parameters, and transmitting means for transmitting original signals having plural items of the copyright information superimposed thereon by the plural encoders over a transmission medium. The reception device includes reception means for receiving the original signals, having superimposed thereon the plural items of the copyright information transmitted from the transmitting device over a transmission medium and a decoder for detecting a sole item of the copyright information from the signals received by the reception means by processing corresponding to the electronic watermark processing of the system and/or parameters of superimposition of the sole item of the copyright information.

With the present transmission/reception system, plural items of the copyright information are superimposed on the original signals by electronic watermark processing of respectively different systems and/or parameters. These original signals are transmitted and a sole item of the copyright information is detected from the transmitted original signals. That is, with the present transmission/reception system, the systems and/or the parameters are changed depending on the contents of each item of the copyright information, and the copyright information, having the systems and/or the parameters changed depending on the contents, is detected.

A transmission/reception system according to embodiments of the present invention includes a transmission device and a reception device. The transmission device includes an encoder for superimposing plural items of the copyright information on original signals by electronic watermark processing of respective different systems or parameters, and transmission means for transmitting the original signals, having the plural items of the copyright information superimposed thereon by the encoder, over a transmission medium The reception device includes reception means for receiving original signals having superimposed thereon plural items of the copyright information transmitted from the transmission device and a decoder for detecting a sole item of the copyright information from signals received by the reception means by processing corresponding to the electronic watermark processing of the system and/or parameters of superimposition of the sole item of the copyright information.

With the present transmission/reception system, plural items of the copyright information are superimposed on the original signals by electronic watermark processing of respective different systems or parameters. These original signals are transmitted and the sole item of the copyright information is detected from the transmitted original signals. That is, with the present transmission/reception system, the systems and/or the parameters are changed depending on the contents of each item of the copyright information, and the copyright information, having the systems and/or the parameters changed depending on the contents, is detected.

A transmission and/or recording method according to embodiments of the present invention includes superimposing a plurality of items of the copyright information on original signals by electronic watermark processing of respective different systems and/or parameters, and transmitting the original signals, having the plural items of the copyright information superimposed thereon on a transmission medium, or recording the signals having the plural items of the copyright information superimposed thereon on a recording medium.

With the present transmission and/or recording method, plural items of the copyright information are superimposed on the original signals by electronic watermark processing of respectively different systems and/or parameters. That is, with the present transmission and/or recording method, the systems and/or the parameters are changed depending on the contents.

A receiving and/or reproducing method according to embodiments of the present invention includes receiving over a transmission medium or reproducing from a recording medium original signals having superimposed thereon plural items of the copyright information by electronic watermark processing of respectively different systems and/or parameters, and detecting a sole item of the copyright information from the received or reproduced signals by processing corresponding to the electronic watermark processing of the system and/or parameters of superimposition of the sole item of the copyright information.

With the present receiving and/or reproducing method, a sole item of the copyright information is detected from the original signals on which plural items of the copyright information have been superimposed by electronic watermark processing of respectively different systems and/or parameters. That is, with the present receiving and/or reproducing method, the copyright information, the systems and/or parameters of which have been changed depending on the contents, is detected.

A transmitting method according to embodiments of the present invention includes superimposing a plurality of items of the copyright information on original signals by electronic watermark processing of respective different systems and/or parameters, transmitting the original signals, having the plural items of the copyright information superimposed thereon, over a transmission medium, receiving the original signals, having the plural items of the copyright information superimposed therein, over the transmission medium, and detecting a sole item of the copyright information by processing corresponding to electronic watermark processing of systems and/or parameters of superimposition of the sole item of the copyright information.

With the present transmission method, plural items of the copyright information are superimposed on the original signals by electronic watermark processing of systems and/or parameters. The resulting original signals are transmitted and a sole item of the copyright information is detected from the transmitted original signals. That is, with the present transmission method, the system and/or the parameters are changed depending on the contents of each item ofg the copyright information. The copyright information, the system and/or the parameters of which have been changed depending on the contents, is detected.

A recording medium according to embodiments of the present invention has recorded thereon original signals on which plural items of the copyright information have been superimposed by electronic watermark processing of respectively different systems and/or parameters.

The present recording medium has, recorded thereon, original signals, on which plural items of the copyright information have been recorded by electronic watermark processing of respective different systems or parameters. That is, with the present recording medium, there is recorded the copyright information whose systems and/or parameters have been varied depending on the contents.

With the transmission and/or recording device, a reception and/or reproducing apparatus, a transmission and reception/recording and reproducing apparatus, a transmission reception system, a transmission and/or recording method, a reception and/or reproducing method and a transmission method, and a recording medium, according to the present invention, plural items of the copyright information are superimposed or detected by respective different decoders or encoders.

Thus, embodiments of the present invention can provide an increased degree of freedom of the superimposition or detection system for the respective items of the copyright information. Specifically, it is possible to transmit a smaller quantity of the copyright protection control information repeatedly and to transmit a larger quantity of the copyright appendage information over longer time, while avoiding deterioration of the original signals. It is thus possible to improve transmission reliability and security of the copyright information while suppressing deterioration of the original signals.

It is moreover possible to simplify the structure and reduce the cost of the decoder employed by users in general. Specifically, it is possible to simplify the structure and reduce the cost of a decoder for the copyright protection control information used in reception and/or reproducing device for household use. Moreover, the copyright information adapted for being detected by the purveyor or the copyright owner of the original signals need not be transmitted or recorded for users in a unified superimposition system. The result is the improved security of, for example, the copyright appendage information.

The invention will now be described by way of example with reference to the accompanying drawings, throughout which like parts are referred to by like references, and in which:

Fig. 1 illustrates electronic watermark processing.

Fig. 2 illustrates the method of superimposing the copyright information on picture signals using the electronic watermark processing.

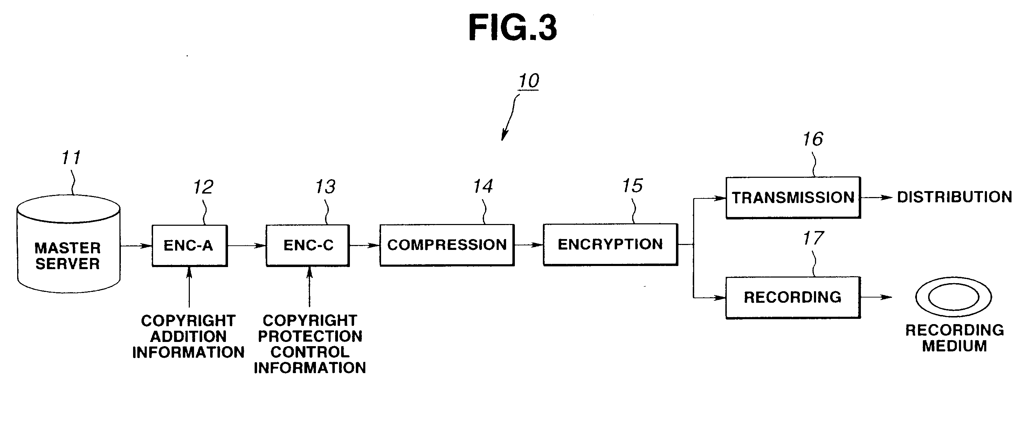

Fig.3 is a block diagram showing an authoring device embodying the present invention.

Fig.4 is a block diagram of a recording device embodying the present invention.

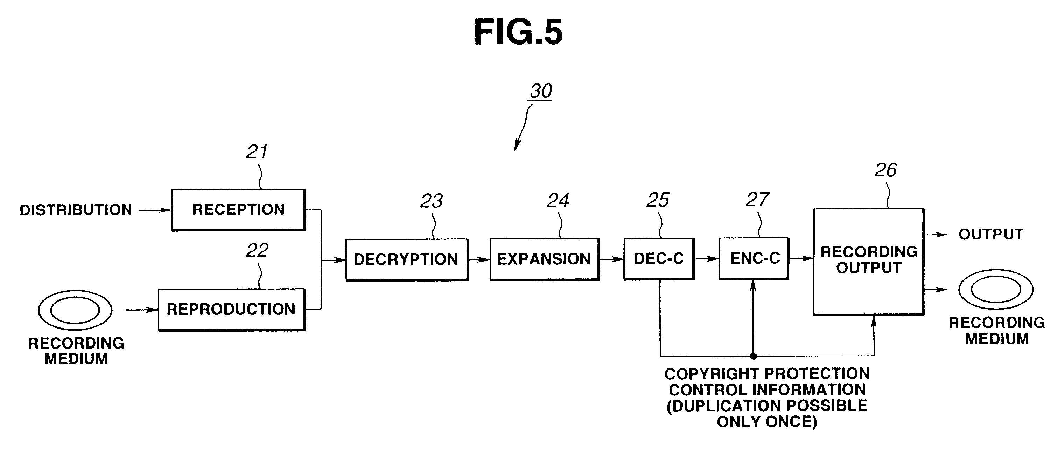

Fig.5 is a block diagram of a recording device embodying the present invention.

Fig.6 is a block diagram of a reproducing device embodying the present invention.

Fig.7 is a block diagram of a detection device for detecting the copyright appendage information embodying the present invention.

Fig.8 is a block diagram of an authoring device embodying the present invention.

Fig.9 is a block diagram of a recording device also embodying the present invention.

Referring to the drawings, preferred embodiments of the present invention will be explained in detail.

First, picture signals generated, recorded on a recording medium or transmitted over a transmission medium, in accordance with the present embodiments, and on which are superimposed the copyright protection control information and the copyright appendage information, are explained.

On these picture signals are superimposed the copyright protection control information and the copyright appendage information by electronic watermark processing.

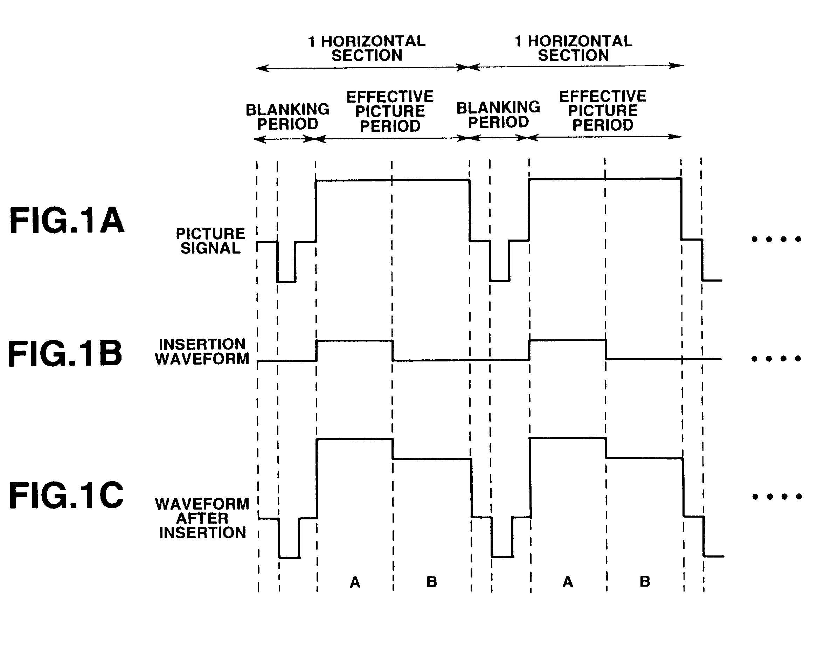

The electronic watermark processing is the processing of burying the information as noise in a perceptually non-crucial portion of the musical or picture data, that is a non-redundant portion with respect to the music or the picture, as described previously. An illustrative method for superimposing a predetermined insertion waveform on the picture signals by this electronic watermark processing is explained with reference to Fig. 1.

In the picture signals, a horizontal period is split into an effective picture period and a horizontal blanking period. Although the picture signals are of a constant signal level in Fig.1 during an effective picture period, they are in effect changed in signal level depending on the picture contents.

The insertion waveform is of a waveform synchronized with the picture signals of the effective picture period. If the effective picture period of the picture signals is split into an area A and an area B, the portions of the insertion waveform coinciding with the areas A and B are denoted as 1 and 0, respectively.

The picture signals shown in Fig.1a, synthesized with the insertion waveform shown in Fig. 1b, becomes the as-inserted waveform shown in Fig.1c. This synthesizing processing, performed for one picture or plural pictures, gives picture signals on which is superimposed the insertion waveform by electronic watermark processing.

For detecting the insertion waveform from the picture signals, having the insertion waveform superimposed thereon by electronic watermark processing, the signals of the B area of the as-inserted waveform are subtracted from the signal of the area A thereof and subtracted signals are cumulatively summed for each horizontal area. By this cumulative addition, the component of the picture signals shown in Fig. 1a is random with respect to the insertion waveform so that it approaches to 0. On the other hand, data of the insertion waveform stand out in relief as a result of accumulation of data 1 and data 0. Thus, with the electronic watermark processing of the present example, it can be detected whether or not the waveform has been inserted or whether or not the waveform has been inserted by reverse phase, if the insertion waveform is the known waveform.

Although the simplest example of electronic watermark processing has been explained above, it is also possible to increase the frequency of or complicate the insertion waveform or to change the waveform while maintaining the period at a fixed value.

Although the processing of superimposing the insertion waveform in the horizontal section of the picture signals is shown here, the insertion waveform can also be superimposed in the vertical direction relative to the picture. Since there is no correlation between the horizontal and vertical directions, different independent insertion waveforms can also be superimposed in the horizontal and vertical directions.

The method of superimposing copyright protection control information and the copyright appendage information on the picture signals using the above-described electronic watermark processing is hereinafter explained.

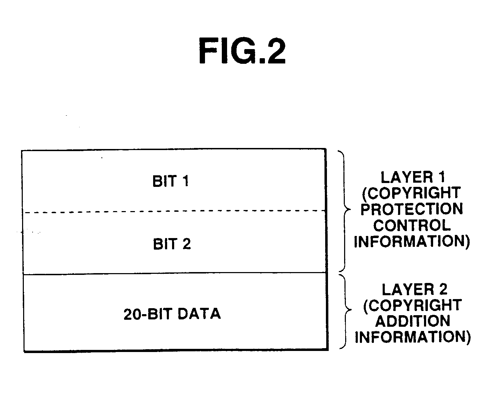

Fig.2 shows a picture displayed on the basis of the picture signals.

The picture displayed on the basis of the picture signals has its space divided into a first layer and a second layer, as shown in Fig.2.

The first layer is an area in which the copyright protection control information is superimposed by electronic watermark processing. The first layer is further divided into two sub-areas in which the information of two bits, that is a bit 1 and a bit 2, representing the copyright protection control information, is superimposed.

The second layer is an area in which the copyright appendage information is superimposed using electronic watermark processing. In the second layer is superimposed the copyright appendage information in, for example, 20 bits.

Specifically, 160 and 80 scanning lines are allocated to the first and second layers, respectively. That is, 80 scanning lines are allocated per bit in the first layer, while 4 scanning lines are allocated per bit in the second layer.

In the present picture signals, the copyright protection control information and the copyright appendage information are superimposed in separate space areas in the present picture signals. That is, the copyright protection control information and the copyright appendage information are encoded on the original signals using respective different parameters.

Meanwhile, if the copyright protection control information and the copyright appendage information are superimposed on the original signals by respective different parameters or different types of the electronic watermark processing, it is unnecessary to divide the picture on the space.

For example, the copyright protection control information and the copyright appendage information can be superimposed in the horizontal and vertical directions on the screen, respectively.

The screen can also be split along the frequency axis, Instead of in the space, that is along the time axis direction, for superimposing the copyright protection control information and the copyright appendage information on the original signals. For example, the copyright protection control information and the copyright appendage information can be superimposed on the low frequency components and on the high frequency components of the picture, respectively.

Also, the copyright protection control information and the copyright appendage information can also be split using the code splitting system termed CDMA for superimposition on the original signals. This code splitting system is a system of multiplying the target data with the pseudo-noise (PN) codes of a predetermined frequency to frequency-spread the target data. By this code splitting system, the pseudo-noise signal for multiplication is changed for the copyright protection control information and the copyright appendage information to split the two items of the information.

The copyright protection control information and the copyright appendage information can be split by electronic watermark processing of different systems, such as by superimposing the copyright protection control information on the high-frequency components of the picture and by spread-spectrum processing of the copyright protection control information by the CDMA system for superimposition on the screen.

On the picture signals are superimposed the copyright protection control information and the copyright appendage information by different system or parameters.

Thus, it becomes possible with the picture signals having the respective items of the copyright information to increase the transfer rate only of the copyright protection control information without increasing the transfer rate for the copyright appendage information. Also, in the present picture signals, the information volume of the copyright protection control information is not varied even if the information volume of the superimposed copyright appendage information is increased. That is, with the present picture signals, the superimposition system for each copyright information item is increased in the degree of freedom. It is therefore possible with the present picture signals to improve reliability and transmission of the copyright information and security while lessening the deterioration of the original signals.

It is noted that the copyright protection control information is detected or rewritten by a decoder of the reproducing device used by general users. Therefore, the superimposition system for the copyright protection control information needs to be standardized, while the decoder needs to be reduced in cost. On the other hand, the copyright appendage information is used by the record manufacturers or by contents purveyors. Therefore, the superimposition system for the copyright protection control information is not in need of unification, such that higher security is demanded even if the decoder is expensive. These requirements are met with the above-described picture signals having the copyright information items superimposed thereon in which the copyright protection control information and the copyright appendage information are superimposed with different systems or parameters.

The authoring device 10 includes a master server 11 holding original signals on memory and adapted for outputting these original signals, a first encoder ENC-A 12 for superimposing the copyright protection control information on the original signals, a second encoder ENC-C 13 for imposing the copyright protection control information on the original signals, a compression circuit 14 for compressing the original signals superimposed by the copyright protection control information and the copyright appendage information, an encryption circuit 15 for interleaving or scambling the compressed original signals using a predetermined key code, a transmission circuit 16 for distributing the interleaved original signals to the transmission medium, and a recording circuit 17 for recording the interleaved original signals on the recording medium.

In the master server 11 are stored musical data and picture data as original signals. The master server routes these original signals to the first encoder 12.

The first encoder 12 superimposes the copyright appendage information on the original signals, such as the musical data or the picture data read out from the master server 11. The copyright appendage information is exemplified by the codes specifying the origin, equipment or the contractor.

The code specifying the origin is a code demonstrating that the disc has been duplicated from a predetermined origin. In the case of the authoring device 10, the code specifying the origin indicates that the disc has been duplicated from the master server 11. The code specifying the equipment is a code for identifying the equipment of the destination of transmission and, as an example, specifies an equipment which has acquired the key code for decryption on payment of a fee. In the case of the authoring device 10, the code specifying the equipment indicates an equipment of destination of transmission of the transmission circuit 16. The code specifying a contractor is a code specifying the user of the destination of transmission and, as an example, identifies a contractor who has acquired the key code for decryption on payment of a fee. In the case of the authoring device 10, the code specifying the contractor specifies the contractor of the destination of transmission of the transmission circuit 16 or the contractor to whom is furnished the recording medium on which recording has been made by the recording circuit 17.

The second encoder 13 superimposes the copyright protection control information on the original signals, such as the musical data or picture data read out from the master server 11. The second encoder 13 superimposes the copyright protection control information on original signals by the above-mentioned electronic watermark processing. The copyright protection control information is the two-bit information for specifying duplication possible (COPY FREE), duplication possible only once (COPY ONCE), continuation of duplication not possible (NO MORE COPY) and duplication not possible (NEVER COPY).

If the copyright protection control information indicates duplication possible, the user is not restricted in duplicating transmitted or recorded original signals on another recording medium If original signals indicated in the copyright protection control information as COPY ONCE are duplicated on another recording medium, the copyright protection control information is rewritten to NO MORE COPY. The user then cannot duplicate the original signals, indicated as COPY ONCE, on another recording medium. If the copyright protection control information indicates NEVER COPY, the user cannot duplicate the distributed or recorded original signals on another recording medium. Meanwhile, the original signals, indicated as NEVER COPY, are transmitted or furnished by a read-only recording medium.

In the above-mentioned first encoder 12 and the second encoder 13, the copyright protection control information and the copyright appendage information are superimposed on the original signals by the electronic watermark processing of respective different systems or parameters. The different systems or parameters mean, as an example, spatially splitting a picture of picture signals into first and second layers.

The original signals, having the copyright protection control information and the copyright appendage information superimposed thereon, are data-compressed by the compression circuit 14 and interleaved by the encryption circuit 15 before being distributed by the transmission circuit 16 or recorded on the recording circuit 17.

With the authoring device 10, as described above, since there are provided two encoders performing electronic watermark processing by different systems and/or parameters, the copyright protection control information and the copyright appendage information can be superimposed respectively independently on the original signals.

In the present authoring device 10, two encoders are used for superimposing the copyright protection control information and the copyright appendage information in different systems and/or different parameters. However, in the present embodiments, the encoders used for superimposition of the copyright protection control information or the copyright appendage information need not be separate circuits but may, for example, have portions thereof in common or may be different in parameter setting while being common in circuit structure.

The recording device for recording original signals furnished by the authoring device 10 on the recording medium and a reproducing device for reproducing the signals from the recording medium are explained. These recording and reproducing devices are intended for domestic use and are used in homes or by users in general.

The information specified by the above-mentioned copyright protection control information and the copyright appendage information is divided on the content basis in a block diagram for illustrating the recording device and the reproducing device.

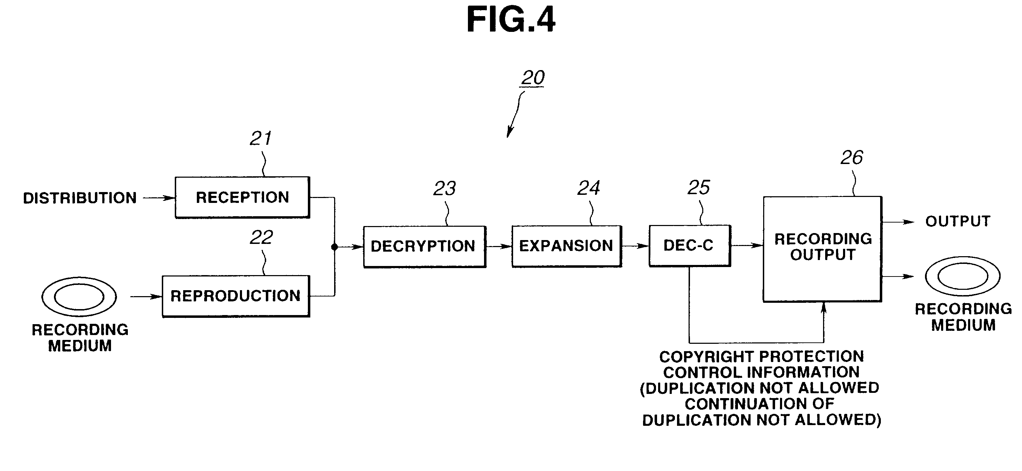

The recording device 20, shown in Fig.4, includes a reception circuit 21, for receiving original signals distributed by the authoring device 10 or the like equipment, a reproducing circuit 22 for reproducing the recording medium recorded by the authoring device 10 or the like equipment, a decryption circuit 23 for deinterleaving or descrambling signals received by the reception circuit 21 or reproduced by the reproducing circuit 22 using a key code or the like, an expansion circuit 24 for expanding deinterleaved original signals, a decoder (DEC-C) 25 for doing recording control on detection of the copyright protection control information from the expanded original signals, and a recording outputting circuit 26 for recording reproduced original signals or outputting reproduced original signals to an external circuit.

The decoder 25 performs processing which is a counterpart operation of that performed by the second encoder 13 of the authoring device 10. If COPY ONCE is detected as the copyright protection control information from the received or reproduced original signals, the decoder 25 routes the detection information to the encoder 27.

The encoder 27 is the same circuit as the encoder 13 of the above-mentioned authoring circuit 10. On detection of the copyright protection control information reading COPY ONCE, the decoder 25 superimposes the information NO MORE COPY as the copyright protection control information on the original signals.

Therefore, if the copyright protection control information COPY ONCE is superimposed on the original signals, and the second recording device 30 records the original signals on another recording medium, the second recording device 30 can duplicate the signals on recording the copyright protection control information NO MORE COPY on the original signals.

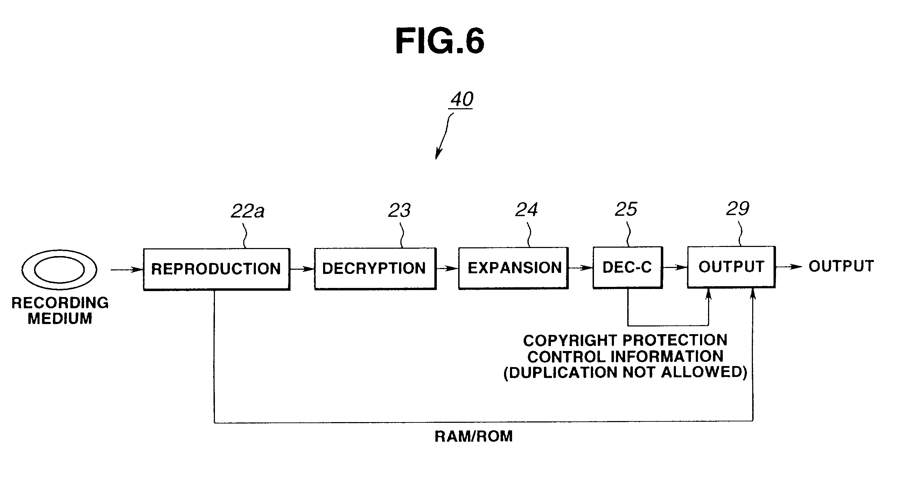

The reproducing device 40, shown in Fig.6, includes a reproducing circuit 22a for reproducing a recording medium, recorded by the authoring device 10 or other equipments, a decryption circuit 23 for deinterleaving or descrambling original signals received or reproduced by the reproducing circuit 22a using a key code or the like, and an expansion circuit 24 for expanding deinterleaved original signals. The reproducing device 40 also includes a decoder (DEC-C) 26 for detecting the copyright protection control information from the expanded original signals to perform recording control and an output circuit 29 for recording reproduced original signals on the recording medium or outputting the reproduced original signals to an external equipment.

The reproducing circuit 22a, adapted for reproducing a recording medium, determines whether the recording medium to be reproduced is a read-only substrate (ROM) or a recordable medium (RAM) to route a decision signal as the control information to the output circuit 29.

The decoder 25 performs processing which is a counterpart of that performed by the second encoder 13 of the above-mentioned authoring device 10. If the decoder 25 has detected the signal NEVER COPY as the copyright protection control information from the received or reproduced signal, it routes the detected information to the output circuit 29.

If the decoder 25 has detected the information NEVER COPY, and the recording medium being reproduced is a RAM, the output circuit 29 halts the reproducing or outputting operation. That is, if the recording medium is a RAM, the information recorded as the copyright protection control information cannot be the information other than COPY FREE or NO MORE COPY. It may therefore be conjectured that, if the copyright protection control information NEVER COPY has been recorded on the RAM, the recording medium has been produced by unauthorized duplication. Meanwhile, if the recording medium is a ROM, the recorded original signals are not obtained in unauthorized duplication and hence output inhibition control is not made.

Therefore, the recording medium to be reproduced is a RAM and NEVER COPY is superimposed as the copyright protection control information for this recording medium, the reproducing device 40 can halt the reproducing or outputting operation.

The recording medium on which the original signals furnished by the authoring device 10 have been recorded thereon, and the detection device for receiving the signals distributed after signal processing for detecting the copyright protection control information, are hereinafter explained.

This detection device is used by, for example, a gramophone record manufacturers or content purveyors for tracing the copyright protection control information from the original signals obtained on unauthorized duplication.

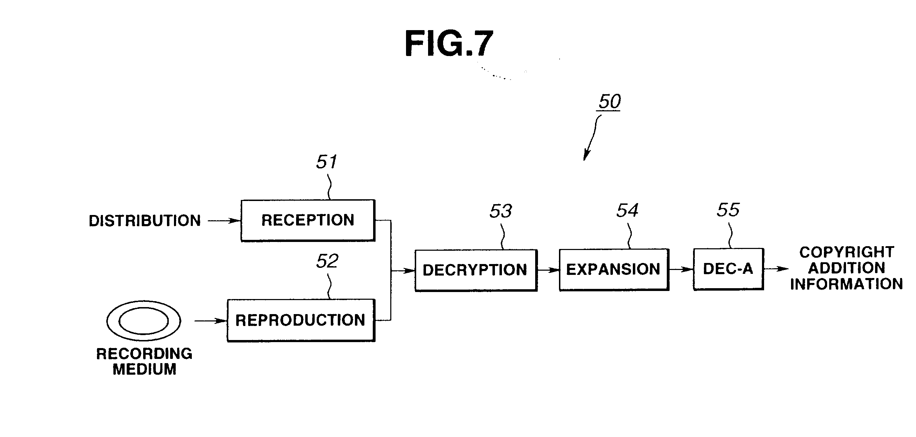

The detection device 50, shown in Fig.7, includes a reception circuit 51 for receiving signals from an equipment having processed original signals recorded thereon, a reproducing circuit 52 for reproducing a recording medium having processed signals recorded thereon and a decryption circuit 53 for deinterleaving or descrambling the signals received or reproduced by the reception circuit 51 or the reproducing circuit 52 using a key code or the like. The detection device 50 also includes an expansion circuit 54 for expanding the deinterleaved or descrambled original signals and a decoder (DEC-A) 55 for detecting the copyright protection control information from the expanded original signals.

The decoder 55 performs processing which is a counterpart of the operation performed by the first encoder 12 of the authoring device 10. For example, the decoder 55 detects the code specifying the origin, equipment or a contractor.

Therefore, the detection device 50 can detect the copyright protection control information.

The authoring device 10, first recording device 20, second recording device 30, reproducing device 40 and the detection device 50 superimpose or detect the copyright protection control information and the copyright appendage information by the two sorts of the decoders associated with the copyright protection control information and the copyright appendage information, as described above. Thus, it is possible with these devices to increase the degree of freedom of the superimposition system for the copyright protection control information and the copyright appendage information. Specifically, it is possible with these devices to differentiate the redundancies of the copyright protection control information and the copyright appendage information from each other. Thus the transfer rate for the copyright protection control information can be increased, while the information volume of the copyright appendage information can be increased, while deterioration in the original signals is minimized. The result is that the copyright information can be enhanced in reliability of transmission and security while deterioration in the original signals is minimized.

It is moreover possible to simplify and reduce the cost of the decoder used by the users in general. That is, in these devices, the decoder for the copyright protection control information, used in the reception and/or reproducing apparatus furnished for household use, may be simpler in structure and reduced in cost. Also, with these devices, it is unnecessary for the copyright owner or the purveyor of the original signals to transmit or record the copyright information for detection in a unified superimposition system. This increases the security of the copyright appendage information.

Meanwhile, the copyright protection control information specifies whether the picture data recorded on a recording medium or transmitted can be duplicated (COPY FREE), can be duplicated only once (COPY ONCE), cannot be continuously duplicated (NO MORE COPY) or cannot be duplicated (NEVER COPY). It is noted that, if the information COPY ONCE is indicated as the copyright protection control information, the copyright protection control information needs to be changed to NO MORE COPY after decoding for re-superimposition on the original signals be the recording device used by the user. However, if the information NEVER COPY is indicated in the copyright protection control information, there is no necessity of re-encoding after decoding on the user-side recording device.

It is therefore desirable to encode the information NEVER COPY in a system or parameter different from that for other items of the copyright protection control information and to prevent deterioration of the original signals. Also, the copyright owner or the content purveyor in many cases superimpose the information NEVER COPY as the copyright protection control information.

In view of the foregoing, the present embodiment superimposes the copyright protection control information and the copyright appendage information by electronic watermark processing of respectively different systems and/or with different parameters on the original signals, while also superimposing at least the information NEVER COPY of the copyright protection control information on the original signals by further different systems and/or parameters.

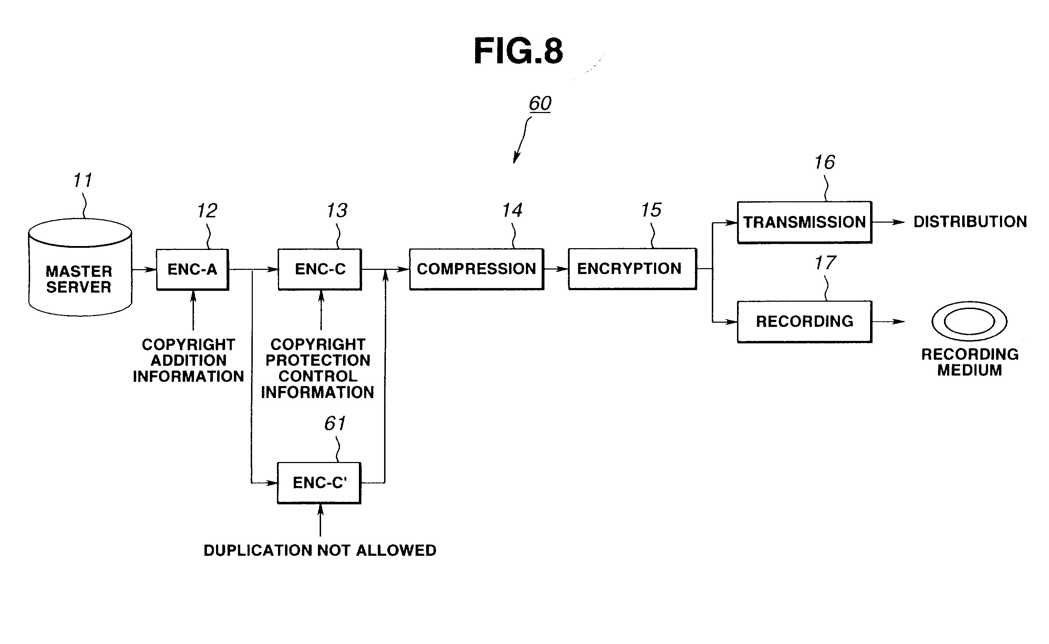

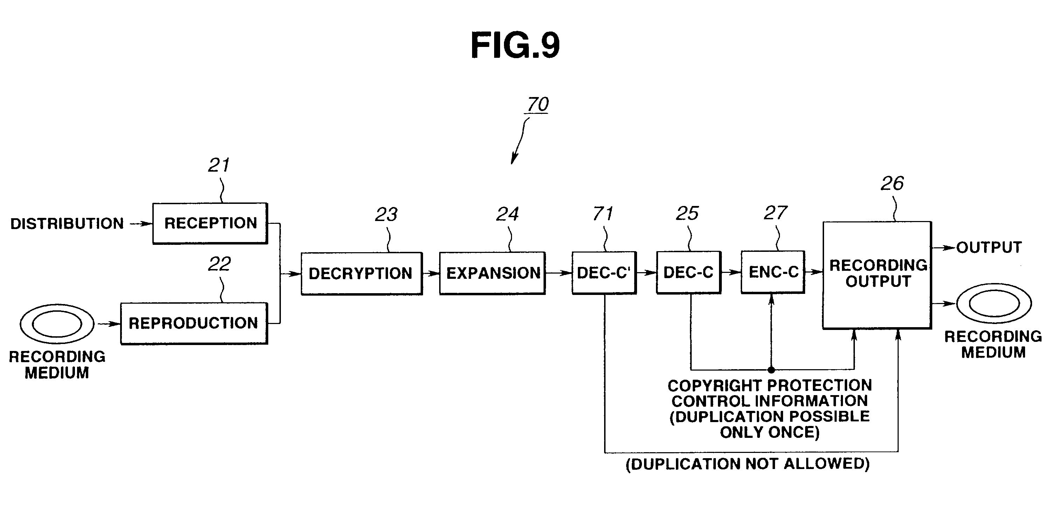

As specified embodiments of the present invention, the authoring device and the recording device are hereinafter explained by referring to Figs.8 and 9. In the following explanation of the authoring device 80 of Fig.8 and the recording device 70 of Fig.9, the structural portions which are the same as those of the above-described authoring device 10 and the recording device 30 are depicted by the same reference numerals and detailed description therefor is emitted for simplicity.

The authoring device 80, shown in Fig.8, includes a master server 11 for storing original signals and for outputting the stored original signals, a first encoder (ENC-A) 12 for superimposing the copyright addition information on the original signals, a second encoder (ENC-C) 13 for superimposing the copyright protection control information on the original signals, a third encoder (ENC-C') 61 for superimposing the information NEVER COPY on the original signals, a compression circuit 14 for compressing the original signals having the copyright protection control information and the copyright appendage information superimposed thereon, an encryption circuit 15 for interleaving and scrambling the compressed original signals using a predetermined key code, a transmission circuit 16 for distributing the interleaved or scrambled original signals over a transmission medium and a recording circuit 17 for recording the interleaved or scrambled original signals on the recording medium.

The first encoder 12 superimposes the copyright appendage information on the original signals, such as musical data or the picture data, read out from the master server 11. This first encoder 12 superimposes the copyright protection control information by the above-mentioned electronic watermark processing. The copyright appendage information is exemplified by a code specifying the origin, a code specifying an equipment and a code specifying a contractor.

The second encoder 13 superimposes the copyright protection control information on the original signals, such as musical data or the picture data, read out from the master server 11. This second encoder 13 superimposes the copyright protection control information by the above-described electronic watermark processing. The copyright protection control information represents the duplication possible (COPY FREE), duplication possible only once (COPY ONCE) and duplication continuation not possible (NO MORE COPY).

If duplication of the original signals, such as music or picture data to be furnished, is to be inhibited, the third encoder 61 superimposes the information duplication not possible (NEVER COPY) on the original signals.

The first to third encoders 12, 13 and 81 superimpose the copyright protection control information, copyright appendage information and the duplication-not-possible information by electronic watermark processing using respectively different systems or parameters.

In the present authoring device 60, the second and third encoders 13, 61 are selectively used depending on the contents of the superimposed copyright protection control information. That is, with the present authoring device 60, the second and third encoders 12, 61 are used for encoding if the copyright protection control information superimposed on the original signals indicate duplication possible or duplication possible only once and if the superimposed control signals indicates duplication not possible, respectively.

With the present authoring device 60, as described above, the copyright protection control information and the copyright appendage information can be independently superimposed on the original signals. In a case wherein the copyright protection control information indicates duplication not possible, superimposition can be realized using electronic watermark processing by systems or parameters different from those of other cases.

The recording device 70 shown in Fig.9 has a reception circuit 21 for receiving the original signals distributed from the authoring device 60 or other equipments, a reproducing circuit 22 for reproducing the recording medium recorded by the authoring device 60 or other equipments, and a decryption circuit 23 for deinterleaving or descrambling the original signals received by the reception circuit 21 or reproduced by the reproducing circuit 22. The recording device 70 also includes an expansion circuit 24 for expanding the deinterleaved original signals and a decoder (DEC-C') 71 for detecting the information NEVER COPY from the expanded original signals to perform recording control. The recording device 70 further includes an encoder (ENC-C) 27 for superimposing the copyright protection control information on the original signals and a recording outputting circuit 26 for recording reproduced original signals on the recording medium or outputting reproduced original signals to an external circuit.

The decoder 71 performs processing which is a counterpart of the operation performed by the second encoder 61 of the above-described authoring device 60. On detection of the information NEVER COPY as the copyright protection control information from the received or reproduced original signals, the decoder 71 inhibits the recording or outputting operation of the recording outputting circuit 26.

The decoder 25 performs processing which is a counterpart of the operation performed by the second encoder 13 of the above-described authoring device 60. On detection of the information ONCE COPY from the received or reproduced original signals, the decoder 25 furnishes the detected information to the encoder 27.

The encoder 27 is the same circuit as the second encoder 13 of the above-described authoring device 10. On detection of the copyright protection control information COPY ONCE, the decoder 25 superimposes the copyright protection control information NO MORE COPY on the original signals.

Therefore, if the copyright protection control information COPY ONCE is superimposed on the original signals, and these original signals are recorded on another recording medium, the recording device 70 can record the copyright protection control information NO MORE COPY to duplicate the resulting signals. On the other hand, on detection of the information NEVER COPY superimposed with a parameter different from that of the copyright protection control information, the recording device70 can inhibit the recording or outputting operation.

Thus, insofar as the copyright protection control information NEVER COPY is concerned, the authoring device 60 or the recording device 70 superimposes the control information in the original signals by electronic watermark processing with a different system or with different parameters. Since this eliminates the necessity for the user to re-encode the control information NEVER COPY, complex encoding processing can be used if the information can be decoded easily. Thus, the information NEVER COPY can be superimposed at a position or time which is visually or aurally less obtrusive subject to detection of the spectrum of the original signals. Moreover, the recording device furnished to the user is not expensive even if the encoder becomes expensive in order to enable complex processing.

## Claims

1. A transmission and/or recording apparatus comprising:
a plurality of encoders for superimposing a plurality of items of the copyright information on original signals by electronic watermark processing of respective different systems and/or parameters; and
transmitting or recording means for transmitting the original signals, having the plural sorts of the copyright information superimposed thereon by said encoders, on a transmission medium, or recording the signals having the plural sorts of the copyright information superimposed thereon on a recording medium.

2. The transmission and/or recording apparatus according to claim 1 wherein said encoders comprise a first encoder for superimposing the copyright protection control information on the original signal and a second encoder for superimposing the copyright appendage information on the original signals.

3. The transmission and/or recording apparatus according to claim 2 wherein said first encoder superimposes the copyright protection control information on the original signal by electronic watermark processing of respective different systems and/or parameters depending on the contents of the information.

4. The transmission and/or recording apparatus according to claim 3 wherein said first encoder superimposes at least duplication not possible information as the copyright protection control information on the original signal by electronic watermark processing of systems or parameters different from those of other items of the copyright protection control information.

5. A transmission and/or recording apparatus comprising:
an encoder for superimposing a plurality of items of the copyright information on original signals by electronic watermark processing of respective different systems or parameters; and
transmitting or recording means for transmitting the original signals, having the plural sorts of the copyright information superimposed thereon by said encoder, on a transmission medium, or recording the signals having the plural sorts of the copyright information superimposed thereon on a recording medium.

6. A reception and/or reproducing apparatus comprising:
receiving or reproducing means for receiving original signals, having plural sorts of the copyright information superimposed thereon by electronic watermark processing of respective different systems and/or parameters over a transmission medium or for reproducing the signals having the plural sorts of the copyright information superimposed thereon from a recording medium; and
a decoder for detecting a sole item of the copyright information from the signals received or reproduced by said reception or reproducing means by processing corresponding to the electronic watermark processing of the systems and/or parameters of superimposition of the sole item of the copyright protection control information.

7. The reception and/or reproducing apparatus according to claim 6 wherein said decoder detects the copyright protection control information by processing corresponding to electronic watermark processing of the systems and/or parameters of superimposition of the copyright protection control information.

8. The reception and/or reproducing apparatus according to claim 7 wherein said decoder detects the copyright protection control information, superimposed by electronic watermark processing of systems and/or parameters different depending on the information contents, by processing corresponding to electronic watermark processing of systems and/or parameters of superimposition of the copyright protection control information.

9. The reception and/or reproducing apparatus according to claim 8 wherein said decoder detects the duplication-not-possible information, superimposed by electronic watermark processing of systems and/or parameters different from those of the other items of the copyright protection control information, by processing corresponding to the electronic watermark processing of the systems and/or parameters of superimposition of the duplication-not-possible information.

10. The reception and/or reproducing apparatus according to claim 6 wherein said decoder detects the copyright appendage information by processing corresponding to the electronic watermark processing of the systems and/or parameters of superimposition of the copyright appendage information.

11. The reception and/or reproducing apparatus according to claim 6 wherein said decoder is made up of a first decoder for detecting the copyright protection control information by processing corresponding to the electronic watermark processing of the systems and/or parameters of superimposition of the copyright protection control information and a second decoder for detecting the copyright appendage information by processing corresponding to the electronic watermark processing of the systems and/or parameters of superimposition of the copyright appendage information.

12. A transmission and reception/recording and reproducing apparatus comprising:
a plurality of encoders for superimposing a plurality of items of the copyright information on original signals by electronic watermark processing of respective different systems and/or parameters;
transmitting or recording means for transmitting the original signals. having the plural items of the copyright information superimposed thereon by said encoders, on a transmission medium, or recording the signals having the plural items of the copyright information superimposed thereon on a recording medium;
reception or reproducing means for receiving original signals, having superimposed thereon plural items of the copyright information by electronic watermark processing of respective different systems and/or parameters, over a transmission medium, or reproducing said original signals, having superimposed thereon plural items of the copyright information by said plural encoders, from the recording medium; and
a decoder for detecting a sole item of the copyright information from signals received or reproduced by said reception or reproducing means by processing corresponding to electronic watermark processing of the system or parameters of superimposition of the sole item of the copyright information.

13. The transmission and reception/recording and reproducing apparatus according to claim 12 wherein said plural encoders comprise a first encoder for superimposing the copyright protection control information on the original signals and a second encoder for superimposing the copyright appendage information on the original signals.

14. The transmission and reception/recording and reproducing apparatus according to claim 13 wherein said first encoder superimposes the copyright protection control information on the original signals by electronic watermark processing of respective different systems and/or parameters depending on the contents of the information.

15. The transmission and reception/recording and reproducing apparatus according to claim 14 wherein said first encoder superimposes at least duplication-not-possible information as the copyright protection control information on the original signals by electronic watermark processing of systems or parameters different from those of other items of the copyright protection control information.

16. The transmission and reception/recording and reproducing apparatus according to claim 12 wherein said decoder detects the copyright protection control information by processing corresponding to the electronic watermark processing of the system and/or parameters of superimposition of the copyright protection control information.

17. The transmission and reception/recording and reproducing apparatus according to claim 16 wherein said decoder detects the copyright protection control information, superimposed by electronic watermark processing of respective different systems and/or parameters depending on the information contents, by processing corresponding to the electronic watermark processing of the systems and/or parameters of superimposition of the copyright protection control information.

18. The transmission and reception/recording and reproducing apparatus according to claim 17 wherein said decoder detects the duplication-not-possible information, superimposed by electronic watermark processing of systems and/or parameters different from other items of the copyright protection control information, by processing corresponding to the electronic watermark processing of the systems and/or parameters of superimposition of the duplication-not-possible information.

19. The transmission and reception/recording and reproducing apparatus according to claim 12 wherein said decoder detects the copyright appendage information by processing corresponding to electronic watermark processing of the systems and/or parameters of superimposition of the copyright appendage information.

20. The transmission and reception/recording and reproducing apparatus according to claim 12 wherein said decoder is made up of a first decoder for detecting the copyright protection control information by processing corresponding to the electronic watermark processing of the systems and/or parameters of superimposition of the copyright protection control information, and a second decoder for detecting the copyright appendage information by processing corresponding to the electronic watermark processing of the systems and/or parameters of superimposition of the copyright appendage information.

21. A transmission and reception/recording and reproducing apparatus comprising:
a plurality of encoders for superimposing a plurality of items of the copyright information on original signals by electronic watermark processing of respective different systems or parameters;
transmitting or recording means for transmitting the original signals, having the plural items of the copyright information superimposed thereon by said encoders, over a transmission medium, or recording the signals having the plural items of the copyright information superimposed thereon on a recording medium;
receiving or reproducing means for receiving original signals, having plural items of the copyright information superimposed thereon by electronic watermark processing of respective different systems or parameters, over a transmission medium, or reproducing said original signals, having plural items of the copyright information superimposed thereon by said plural encoder, from the recording medium; and
a decoder for detecting a sole item of the copyright information from signals received or reproduced by said receiving or reproducing means by processing corresponding to the electronic watermark processing of the system or parameters of superimposition of the sole item of the copyright information.

22. A transmission/reception system comprising:
a transmission device including a plurality of encoders for superimposing plural items of the copyright information on original signals by electronic watermark processing of respective different systems and/or parameters, and transmitting means for transmitting original signals having plural items of the copyright information superimposed thereon by said plural encoders over a transmission medium; and
a reception device including reception means for receiving the original signals, having superimposed thereon the plural items of the copyright information transmitted from the transmitting device over a transmission medium and a decoder for detecting a sole item of the copyright information from the signals received by said reception means by processing corresponding to the electronic watermark processing of the system and/or parameters of superimposition of said sole item of the copyright information.

23. The transmission/reception system according to claim 22 wherein said plural encoders of the transmission device comprise a first encoder for superimposing the copyright protection control information on the original signals and a second encoder for superimposing the copyright appendage information on the original signals.

24. The transmission/reception system according to claim 23 wherein said first encoder superimposes the copyright protection control information on the original signals by electronic watermark processing of respective different systems and/or parameters depending on the contents of the information.

25. The transmission/reception system according to claim 24 wherein said first encoder superimposes at least duplication-not-possible information as the copyright protection control information on the original signal by electronic watermark processing of the system or parameters different from those of other items of the copyright protection control information.

26. The transmission/reception system according to claim 23 wherein said decoder of the reception device detects the copyright protection control information by processing corresponding to the processing performed by said first encoder.

27. The transmission/reception system according to claim 26 wherein said decoder of the reception device detects the copyright protection control information, superimposed by electronic watermark processing of systems and/or parameters respectively different depending on the contents of the information, by processing corresponding to the electronic watermark processing of the systems and or parameters of superimposition of the copyright protection control information.

28. The transmission/reception system according to claim 27 wherein said decoder detects the duplication-not-possible information superimposed by electronic watermark processing of the system and/or parameters different from those of the remaining items of the copyright protection control information by processing corresponding to the electronic watermark processing of the system and/or parameters of superimposition of the duplication-not-possible information.

29. The transmission/reception system according to claim 28 wherein said decoder of the reception device detects the copyright appendage information by processing corresponding to that performed by said second encoder.

30. The transmission/reception system according to claim 23 wherein said decoder of the reception device includes a first decoder for detecting the copyright protection control information by processing corresponding to that performed by said first encoder and a second decoder for detecting the copyright appendage information by processing corresponding to that performed by said second encoder.

31. A transmission/reception system comprising:
a transmission device including an encoder for superimposing plural items of the copyright information on original signals by electronic watermark processing of respective different systems or parameters, and transmission means for transmitting the original signals, having the plural items of the copyright information superimposed thereon by said encoder, over a transmission medium; and
a reception device including reception means for receiving original signals having superimposed thereon plural items of the copyright information transmitted from said transmission device and a decoder for detecting a sole item of the copyright information from signals received by said reception means by processing corresponding to the electronic watermark processing of the system and/or parameters of superimposition of the sole item of the copyright information.

32. A transmission and/or recording method comprising:
superimposing a plurality of items of the copyright information on original signals by electronic watermark processing of respective different systems and/or parameters; and
transmitting the original signals, having the plural items of the copyright information superimposed thereon on a transmission medium, or recording the signals having the plural items of the copyright information superimposed thereon on a recording medium.

33. The transmission and/or recording method according to claim 32 wherein the copyright protection control information is superimposed on original signals and wherein
the copyright appendage information is superimposed on the original signals by the system and/or parameters different from those for the copyright protection control information.

34. The transmission and/or recording method according to claim 33 wherein the copyright protection control information is superimposed on the original signals by the system and/or parameters respectively different depending on the contents of the information.

35. The transmission and/or recording method according to claim 34 wherein at least the duplication-not-possible information as the copyright protection control information is superimposed on the original signals by electronic watermark processing of the system or parameters different from those of other items of the copyright protection control information.

36. A receiving and/or reproducing method comprising:
receiving over a transmission medium or reproducing from a recording medium original signals having superimposed thereon plural items of the copyright information by electronic watermark processing of respectively different systems and/or parameters; and
detecting a sole item of the copyright information from the received or reproduced signals by processing corresponding to the electronic watermark processing of the system and/or parameters of superimposition of the sole item of the copyright information.

37. The receiving and/or reproducing method according to claim 36 wherein the copyright protection control information is detected by processing corresponding to electronic watermark processing of the system and/or parameters f superimposition of the copyright protection control information.

38. The receiving and/or reproducing method according to claim 37 wherein the copyright protection control information superimposed by electronic watermark processing of systems and/or parameters respectively different depending on the contents of the information by processing corresponding to the electronic watermark processing of the systems and/or parameters of superimposition of the copyright protection control information.

39. The receiving and/or reproducing method according to claim 38 wherein the duplication-not-possible information superimposed by electronic watermark processing of the system and/or parameters different from the other items of the copyright protection control information is detected by processing corresponding to the electronic watermark processing of the system and/or parameters of superimposition of the duplication-not-possible information.

40. The receiving and/or reproducing method according to claim 36 wherein the copyright appendage information is detected by processing corresponding to electronic watermark processing of the system and/or parameters of superimposition of the copyright appendage information.

41. The receiving and/or reproducing method according to claim 36 wherein the copyright protection control information is detected by processing corresponding to the electronic watermark processing of the systems and/or parameters of superimposition of the copyright protection control information and wherein the copyright appendage information is detected by processing corresponding to the electronic watermark processing of the system and/or parameters of superimposition of the copyright appendage information.

42. A transmitting method comprising:
superimposing a plurality of items of the copyright information on original signals by electronic watermark processing of respective different systems and/or parameters;
transmitting the original signals, having the plural items of the copyright information superimposed thereon, over a transmission medium;
receiving said original signals, having the plural items of the copyright information superimposed therein, over said transmission medium; and
detecting a sole item of the copyright information by processing corresponding to electronic watermark processing of systems and/or parameters of superimposition of said sole item of the copyright information.

43. A recording medium having recorded thereon original signals on which plural items of the copyright information have been superimposed by electronic watermark processing of respectively different systems and/or parameters.

44. The recording medium according to claim 43 having original signals recorded thereon, said original signals being such signals on which the copyright protection control information and the copyright appendage information have been superimposed by electronic watermark processing of respectively different systems and/or parameters.
